# FASCICULE DE BREVET EUROPEEN

(11) **EP 1 204 524 B1**
(45) Date de publication et mention de la délivrance du brevet: **26.05.2004**
(21) Numéro de dépôt: 00958574.6
(22) Date de dépôt: 21.07.2000
(51) Int. Cl.: B29C 49/20, B29K 67/00, B29L 22/00

(54) **MACHINES DE SOUFFLAGE DE RECIPIENTS A POIGNEE RAPPORTEE COMPORTANT UN BRAS DE TRANSFERT PERFECTIONNE**
VORRICHTUNG ZUM BLASFORMEN VON BEHÄLTERN AN DENEN HANDGRIFFE ANGEFORMT WERDEN UND MIT VERBESSERTER HANDGRIFFTRANSPORTVORRICHTUNG
MACHINES FOR BLOWING CONTAINERS WITH BUILT-ON HANDLES COMPRISING AN IMPROVED TRANSFER ARM

(30) Priorité: 23.07.1999 FR 9909697
(43) Date de publication de la demande: 15.05.2002
(73) Titulaire: SIDEL, 76053 Le Havre Cedex (FR)
(72) Inventeur: Pellegatta, Jean-Louis, F-76053 Le Havre Cedex (FR); Dauzou, Laurent, F-76053 Le Havre Cedex (FR)
(74) Mandataire: Siloret, Patrick
(86) Numéro de dépôt international: PCT/FR2000/002094
(87) Numéro de publication internationale: WO 2001/007233

(56) Documents cités:
- EP-A- 0 460 788
- EP-A- 0 670 213
- WO-A-96/14975
- WO-A-96/33059
- US-A- 5 863 571

## Description

L'invention se rapporte au domaine des machines de soufflage permettant de produire des récipients à poignée rapportée. Plus particulièrement, l'invention s'applique aux machines qui effectuent le soufflage d'une préforme préalablement réalisée par injection.

De telles machines comportent au moins une unité de moulage munie d'un moule en deux parties. Les deux parties du moule sont portées chacune par une partie d'un porte-moule et elles délimitent une cavité dans laquelle, lorsque l'unité de moulage est ouverte, la préforme est amenée par au moins un bras de transfert. Pour que le récipient comporte une poignée rapportée, on amène dans le moule, avant le soufflage, une poignée qui comporte au moins une zone d'accrochage destinée à être engagée à l'intérieur de la cavité pour être surmoulée lors du soufflage par le matériau de la préforme. Pour cela, la machine comporte au moins un dispositif de préhension apte à saisir une poignée par une zone de préhension pour l'amener depuis une unité d'alimentation jusqu'au moule,

Dans les machines connues comme celle décrite dans WO-A-9 614 975, le dispositif de préhension de poignée est généralement agencé sur un second bras de transfert, analogue au bras de transfert des préformes mais distinct de celui-ci.

Or, ces deux bras de transferts effectuent des mouvement différents, de sorte que, lorsqu'ils sont commandés par des cames, il faut prévoir deux jeux de cames distincts. Le système de transfert des différents éléments dans le moule se trouve donc encombrant et son coût est relativement élevé.

De plus, le bras de tranfert des poignée est alors généralement agencé à un niveau inférérieur à celui du bras de transfert de préformes, du moins dans le cas où le récipient est soufflé col en haut. En effet, la poignée est obligatoirement située au niveau du corps du récipient puisque c'est sur celui-ci qu'elle doit être fixée.

Or, cette disposition du bras de transfert de poignée est pénalisante car elle pose des problèmes d'interférence entre le bras et l'unité de moulage. Dans certains cas, il faut prévoir des découpes dans le porte-moule pour permettre le passage du bras, ces découpes étant bien entendu néfastes à la résistance mécanique du porte-moule.

Par ailleurs, les systèmes connus nécessitent de relacher la poignée avant la fermeture de l'unité de moulage. Ainsi, il est nécessaire de prévoir des moyens qui assurent un maintien provisoire de la poignée sur l'un des demi-moule au cours de la fermeture du moule. Or, il arrive que la poignée se détache du moule avant cette fermeture, ce qui provoque la formation d'un récipient non conforme, voire, dans certains cas, l'arrêt de la machine.

L'invention a donc pour but de proposer une nouvelle conception du système de transfert de préformes qui apporte une solution aux problèmes évoqués ci-dessus.

Dans ce but, l'invention propose une machine selon la revendication 1.

D'autres modes de réalisation sont l'objet des revendications dépendantes 2 à 12.

D'autres caractéristiques et avantages de l'invention apparaîtront à la lecture de la description détaillée qui suit ainsi que dans les dessins annexés dans lesquels :
- la figure 1 est une vue schématique de dessus d'une machine de soufflage de récipients conforme aux enseignements de l'invention ;
- la figure 2 est une vue schématique en perspective illustrant les moyens de transfert selon l'invention ; et
- les figures 3 à 5 sont des vues en coupe illustrant respectivement l'introduction d'une préforme et d'une poignée dans un moule grâce au bras de transfert selon l'invention, le recul du bras pour relâcher la poignée, et le dégagement de la pince de préhension de poignée.

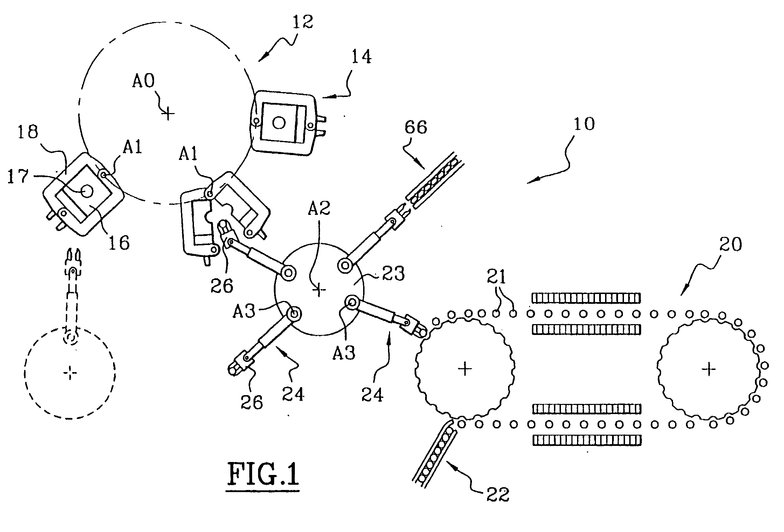

On a illustré sur la figure 1 un exemple d'implantation générale d'une machine de soufflage selon l'invention. Il s'agit d'une machine de moulage de récipients par soufflage de préformes préalablement réalisées par injection. Ces récipients peuvent par exemple être des bouteilles en polyéthylène téréphtalate (PET).

La machine 10 illustrée est du type rotatif de sorte qu'elle comporte un carrousel 12 qui est animé d'un mouvement de rotation continu autour de son axe A0. Dans la suite du texte, on considérera par commodité que l'axe A0 est orienté verticalement, mais cela ne soit pas être considéré comme une limitation à la portée de l'invention.

Le carrousel 12 porte plusieurs unités de moulage 14 de type portefeuille comportant chacune un moule 16 en deux parties, le moule étant porté par un porte-moule 18. Le porte-moule est lui aussi réalisé en deux parties qui sont articulées entre elles, et sur le carrousel 12, autour d'un axe A1 vertical. Chaque partie de porte-moule porte une partie du moule. Des moyens de commande (non représentés) permettent de provoquer l'ouverture et la fermeture de l'unité de moulage par pivotement des deux parties de moule autour de l'axe A1.

En position fermée, les deux parties de moule sont en appui l'une contre l'autre selon un plan de joint qui s'étend sensiblement dans un plan radial du carrousel, c'est-à-dire dans un plan contenant son axe A0. Le moule délimite alors une cavité 17 à la forme de la bouteille à produire. On notera que le moule 16 pourra être un moule à coquille composé de deux porte-coquille portant chacun une demi-coquille, la cavité étant délimitée par les demi-coquilles.

Dans l'exemple illustré, l'axe A1 de pivotement des deux parties du porte-moule 18 est contenu dans le plan radial. En position ouverte, les deux parties de moule sont écartées l'une de l'autre symétriquement par rapport au plan radial, l'axe A1 de pivotement étant agencé radialement vers l'intérieur par rapport à l'axe A0 du carrousel.

Dans l'exemple illustré, la machine 10 comporte aussi un four de conditionnement thermique 20 destiné à réchauffer les préformes 21 préalablement réalisées par injection, lesquelles sont introduites dans le four 12 par une unité d'alimentation 22. En sortie de four, les préformes sont prises en charge par des moyens de transfert qui permettent d'amener les préformes une à une (ou deux à deux dans le cas d'une machine à moules multi-empreintes) dans une des unités de moulage 14 du carrousel 12.

La machine selon l'invention étant destinée à fabriquer des récipients à poignée rapportée, il est nécessaire de prévoir des moyens qui permettent d'amener une poignée 50 jusqu'au moule 16 et de l'y placer avec précision de telle sorte que des zones d'accrochage 51 de la poignée soient engagées dans la cavité 17 du moule 16 pour être surmoulées par la matière thermoplastique du récipient et assurer l'ancrage de la poignée 50 sur le récipient.

Le problème du chargement de la poignée dans le moule est analogue sur certains points à celui du chargement de la préforme. En effet, il s'agit d'amener la poignée dans un moule qui suit une trajectoire circulaire autour de l'axe A0. Le temps de chargement doit être le plus court possible pour que la proportion du temps utile de soufflage sur le temps total d'une révolution du carrousel soit la plus élevée possible.

Par ailleurs, la trajectoire de la poignée lors de son introduction dans le moule doit être adaptée au mieux pour limiter l'angle d'ouverture du moule, sans pour autant qu'il n'y ait d'interférence entre les moyens de transfert d'une part et le moule et le porte-moule d'autre part.

Aussi, selon un aspect de l'invention, on prévoit que le dispositif de préhension de la préforme et le dispositif de préhension de la poignée soient portés tous les deux par un même bras de transfert.

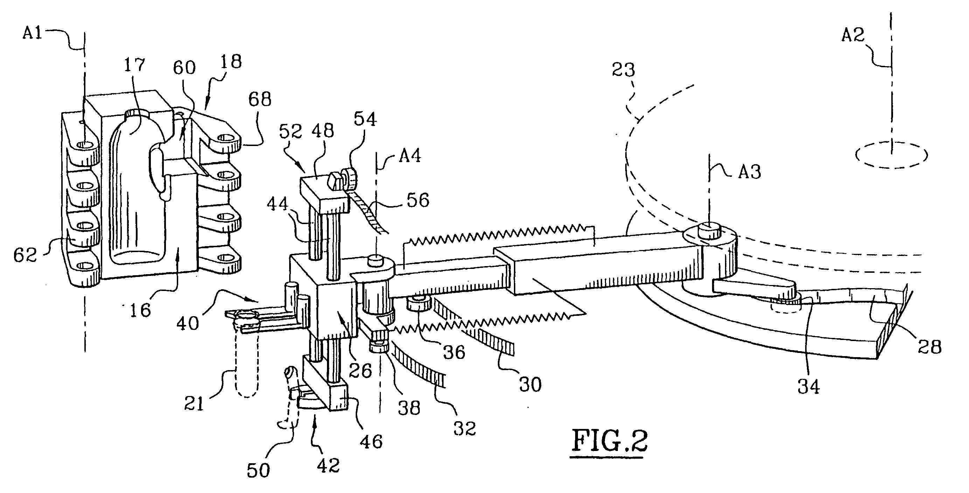

Comme on peut le voir sur les figures 1 et 2, la machine selon l'invention comporte un roue de transfert de type connu comportant notamment un plateau tournant 23 qui est entrainé en rotation de manière continue autour de son axe vertical A2. A la périphérie du plateau tournant, des bras de transfert 24 sont fixés de manière à s'étendre sensiblement radialement par rapport à l'axe A2. Toutefois, au niveau de sa fixation sur le plateau 23, chaque bras 24 peut pivoter autour d'un axe vertical A3. Ainsi, suivant le sens de rotation du bras 24 autour de l'axe A3, la vitesse angulaire de l'extrémité libre du bras 24 autour de l'axe A2 de la roue de transfert est accélérée ou décélérée par rapport à la vitesse angulaire continue du plateau 23.

Par ailleurs, on peut voir sur les figures que chaque bras 24 est télescopique de manière à pouvoir allonger ou raccourcir la distance entre l'extrémité libre du bras et l'axe A3 de fixation du bras 24 sur la roue.

Enfin, on peut voir que l'extrémité libre du bras 24 est réalisée sous la forme d'une tête pivotante 26 qui est articulée autour d'un axe A4, lui aussi vertical, et qui porte d'une part un dispositif de préhension de la préforme et d'autre part un dispositif de préhension de la poignée.

Dans l'exemple proposé, les mouvements de rotation du bras autour de l'axe A3, d'allongement radial du bras 24 et de rotation de la tête 26 autour de l'axe A4 sont commandés par des dispositifs à cames. Ainsi, la roue de transfert comporte un ou plusieurs plateau fixes sur lesquels sont formés des chemins de came (28, 30, 32). Des galets (34, 36, 38), dont chacun est monté à rotation respectivement sur l'extrémité de fixation du bras, sur l'extrémité libre du bras, et sur la tête pivotante 26, coopèrent chacun avec un de ces chemins de came pour commander les trois mouvements énumérés ci-dessus. De manière connue, les galets qui commandent une rotation sont montés à rotation sur la pièce dont ils commandent la rotation et ils sont excentrés par rapport à l'axe de cette rotation.

De la sorte, en tenant compte de la rotation de la roue de transfert, le mouvement absolu des dispositifs de préhension de la préforme 21 et de la poignée 50 résulte de la composition de quatre mouvements commandés, ce qui permet de déterminer à chaque instant une trajectoire, une vitesse et une orientation précise de ces dispositifs.

Dans l'exemple illustré, les différents mouvements sont commandés par des systèmes mécaniques à came. Cependant, on pourrait aussi mettre en oeuvre l'invention en utilisant un bras de transfert dans lequel au moins certains des mouvements seraient commandés par des actionneurs motorisés.

Dans tous les cas, on voit que les mouvements de la tête orientable 26 du bras 24 sont entièrement contenus dans un plan perpendiculaire à l'axe A2 de la roue de transfert, c'est-à-dire en l'occurrence dans un plan horizontal.

Le dispositif de préhension de préformes est ici réalisé sous la forme. d'une simple pince élastique 40 capable de saisir une préforme 21 en position verticale par sa collerette. Avec ce système de transfert, la préforme est donc saisie en sortie du four 20 à la hauteur voulue pour son instruction dans le moule 16.

Le dispositif de préhension de poignée 42 est lui aussi réalisé sous la forme d'une pince élastique mais cette dernière est montée sur un coulisseau 52 qui est mobile verticalement par rapport à la tête pivotante 26. Le coulisseau est par exemple réalisé sous la forme de deux tiges verticales parallèles 44 qui coulissent verticalement au travers de la tête 26 et qui sont réunies à leurs extrémités par deux traverses horizontales inférieure 46 et supérieure 48.

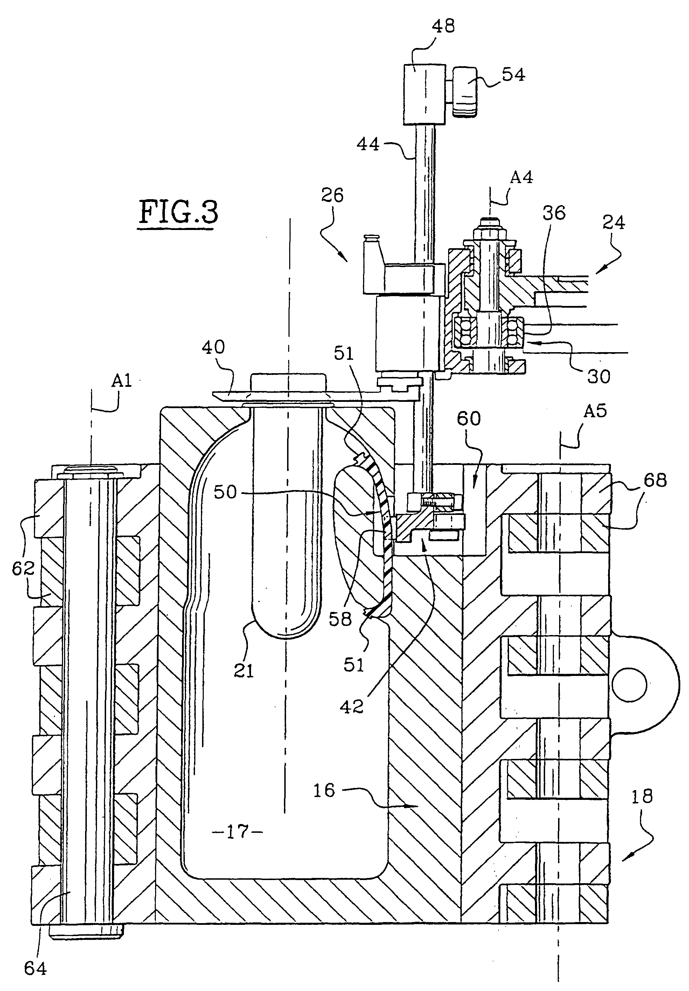

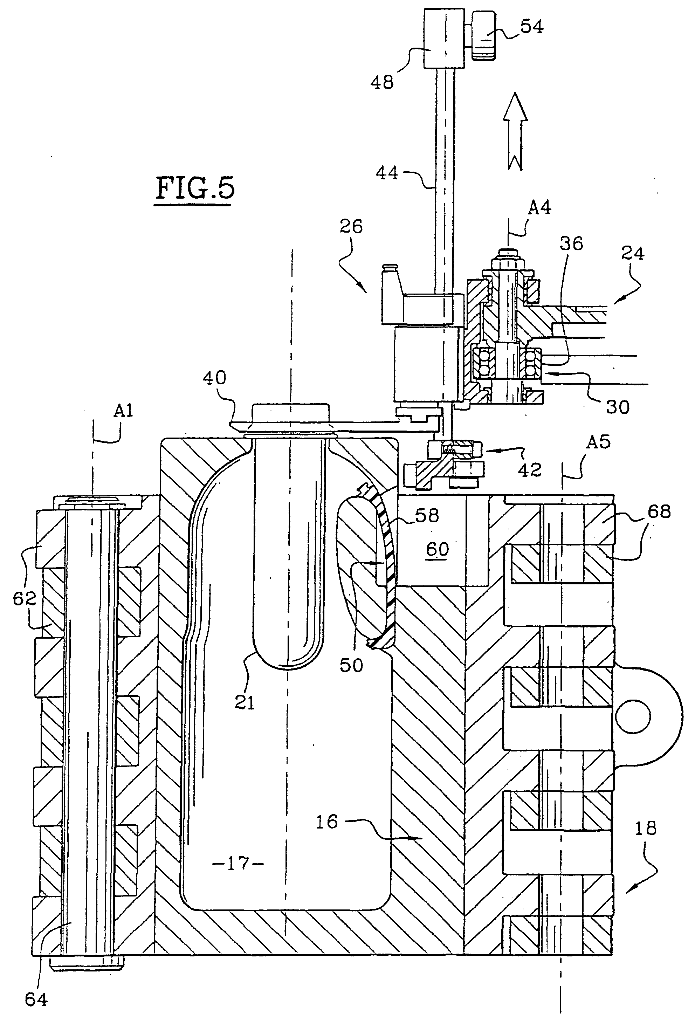

La pince de préhension de poignées 42 est fixée sur la traverse inférieure 46. Sur la traverse supérieure 48, on peut voir un galet 54 qui est susceptible de coopérer avec un chemin de came fixe 56 pour commander les déplacements verticaux du coulisseau, et donc de la pince 42, par rapport au plan horizontal dans lequel se déplace le bras 24. En fonction de la position angulaire du bras 24 autour de l'axe A2 de la roue de transfert, la pince 42 peut donc se déplacer verticalement entre une position basse illustrée à la figure 3 et une position haute illustrée à la figure 5.

La pince 42 est destinée à saisir une poignée 50 par une zone de préhension 58. Comme on l'a illustré sur la figure 1, la saisie par le bras 24 d'une poignée 50 peut se faire au niveau d'une unité d'alimentation 66 agencée avant le four 20 dans le sens de rotation du bras de transfert 24. Toutefois, suivant la configuration de la machine, on pourrait aussi prévoir que le bras saisisse une poignée après la saisie de la préforme, ou que cela se fasse simultanément.

Selon un aspect de l'invention, il est prévu que, lorsque la poignée 50 est mise en position dans le moule, sa zone de préhension 58 soit agencée en dehors de celui-ci. En effet seules les zones d'accrochage 51 de la poignée 50 doivent obligatoirement être situées à l'intérieur de la cavité 17 du moule pour pouvoir être recouvertes par le matériau thermoplastique de la préforme qui se déforme au cours de l'opération de soufflage.

De la sorte, il est possible de prévoir que la pince de préhension 42 continue de maintenir la poignée 50 même lorsque le moule est en position fermée. Cela permet notamment de remédier aux problèmes connus dans les machines antérieures, à savoir le fait qu'il était auparavant nécessaire de coincer la poignée dans l'un des demi-moules, et de retirer la pince de préhension de poignée avant la fermeture du moule. Aussi, il fallait prévoir des moyens de coincement qui soient suffisamment forts pour maintenir à eux seuls la poignée lors de la fermeture et, à la fois, qui soient suffisamment faibles pour ne pas trop gêner la pose de la poignée sur le demi-moule.

Au contraire, selon de cet aspect de l'invention, la poignée 50 peut rester maintenue par le bras 24 pendant tout le temps de fermeture du moule, la poignée n'étant relâchée qu'après. Or, après la fermeture, la poignée est parfaitement maintenue dans le moule, notamment par les parties de la poignée qui relient la zone de préhension 58 aux zones de d'accrochage 51 et qui s'étendent au travers d'une parois latérale du moule 16.

Dans l'exemple illustré, la poignée présente 50 pour l'essentiel la forme d'une barre sensiblement verticale dont les deux extrémités axiales s'étendent horizontalement en direction de l'intérieur du récipient pour former les zones d'accrochage 51. La zone de préhension 58, par laquelle la pince 42 saisit la poignée, est ici représentée sensiblement à mi-hauteur de la poignée, mais on peut aussi imaginer qu'elle soit agencée par exemple au niveau d'une extrémité supérieure de celle-ci.

On a illustré sur les figures 3 à 5 les différentes étapes qui suivent la pose de la poignée dans le moule. En effet, le bras 24 est commandé par les différentes cames pour amener simultanément la préforme 21 et la poignée 50 dans le moule ouvert. Notamment, la tête pivotante 26 est commandée pour occuper une position angulaire bien déterminée par rapport au plan de joint du moule. Lorsque les deux éléments 21, 50 sont correctement placés, le moule 16 est refermé.

Dans l'exemple illustré, on peut voir que le bras de transfert 24, à l'exception de la pince de préhension de poignées 42, est alors situé au-dessus du moule et du porte-moule, si bien qu'il n'y a pas de risque d'interférence.

Au contraire, la pince 42, qui maintien encore la poignée 50, est encore a proximité immédiate du moule.

Selon un autre aspect de l'invention, le moule et le porte-moule délimitent entre eux un évidement 60 qui débouche vers le haut et qui est prévu pour recevoir la pince 42 de prise de poignées lorsqu'elle se trouve en position basse. Cet évidement 60 est creusé à la fois dans une face externe du moule 16 et dans une face interne du porte-moule 18 et il est destiné à recevoir la partie inférieure du coulisseau 52 qui porte la pince de préhension de poignée 42. Il est donc débouchant vers le haut. Bien entendu, la zone de préhension 58 de la poignée 50 qui dépasse à l'extérieur du moule 16 devient accessible depuis l'extérieur par cet évidement 60.

Grâce à cet évidement, la pince 42 peut donc être reçue, en position basse, entre le moule 16 et le porte-moule 18 lorsque l'unité de moulage est fermée, ainsi que cela est illustré à la figure 3. La position basse de la pince 42 correspond donc à la position verticale de la poignée dans le moule.

On notera que, en fonction de la géométrie des pièces, on pourra choisir indifféremment d'effectuer la prise de la poignée au niveau de l'alimentation 66 avec la pince 42 en position basse ou en position haute.

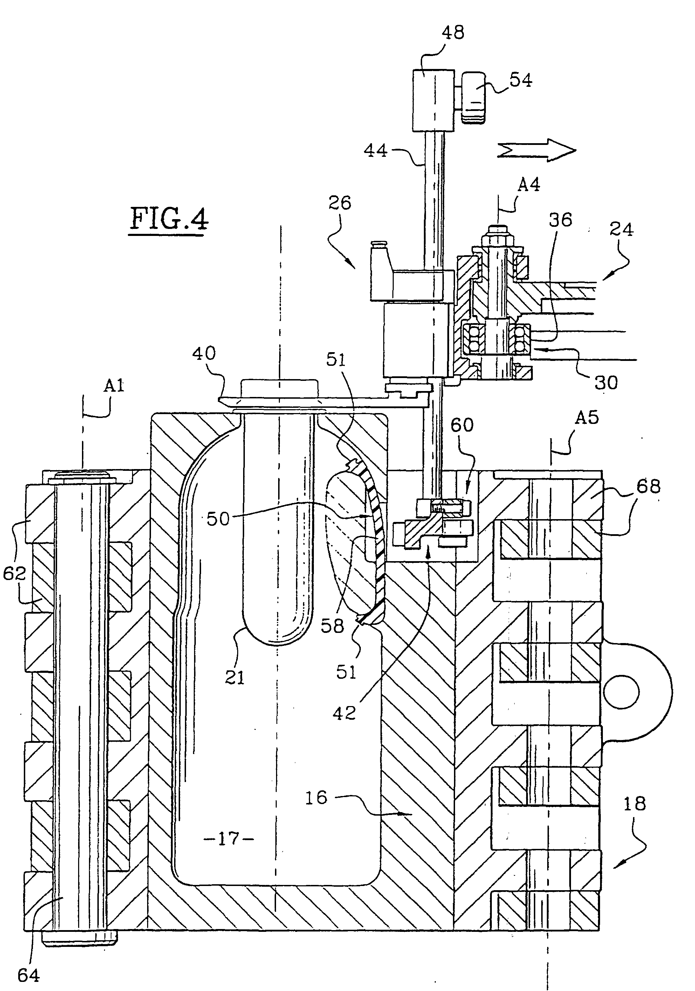

L'évidement 60 est prévu pour permettre un léger retrait du bras 24 radialement vers l'extérieur par rapport à l'axe A0 du carrousel 12. Ce faisant, la pince 42 se dégage de la poignée 50 qui reste emprisonnée dans le moule ainsi que cela est illustré à la figure 4. Le retrait du bras 24 n'a pas besoin d'être important : il suffit de permettre un décrochage de la pince 42.

On notera que, entre le début de la fermeture du moule et le décrochage de la pince 42, la tête orientable 26 est commandée pour conserver une orientation constante de la pince 42 et de la poignée 50 par rapport au plan radial du carrousel passant par l'axe A0 d'articulation du moule considéré, ceci en dépit du fait que ce plan change de position et d'orientation du fait de la rotation du carrousel 12.

Une fois la pince 42 décrochée, le coulisseau 52 peut être commandé verticalement vers sa position haute tel que cela.est illustré à la figure 5 où l'on peut voir que le dispositif 42 de préhension de poignées se trouve au-dessus d'une face supérieure du porte-moule 18, en dehors de l'évidement 60. Dans cette position, il ne peut plus y avoir d'interférence entre le bras de transfert 24 et l'unité de moulage 14, si bien que les deux peuvent s'écarter l'un de l'autre du fait de leurs rotations respectives autour de deux axes parallèles distincts.

Ceci permet notamment de ne pas avoir à limiter la hauteur du porte-moule.

Dans l'exemple illustré, les deux parties du porte-moule 18 comportent, sur un côté du plan de joint, des charnons d'articulation complémentaires 62 traversés par un arbre d'articulation 64 d'axe A1. De l'autre côté du plan de joint, les deux parties du porte-moule 18 comportent des oreilles. de verrouillage 68 agencées par paires. Les deux oreilles d'une même paire appartiennent chacune à l'une des parties du porte-moule et elles sont superposées axialement selon un axe A5 lorsque le porte-moule 18 est fermé. Les oreilles 68 sont percées de manière que, pour chaque paire, un doigt de verrouillage (non représenté) d'axe A5 puisse être engagé axialement au travers des deux oreilles pour verrouiller les deux parties du porte-moule 18 en position fermée.

Grâce à la présence de l'évidement, on peut prévoir que la paire supérieure d'oreilles 68 soit agencée au-dessus du niveau de la pince 42 en position basse. Ainsi, on peut conserver un nombre de points de verrouillages suffisant pour garantir une parfaite fermeture de l'unité de moulage 14, en conservant surtout une répartition de ces points de verrouillage sur toute la hauteur du porte-moule. En effet, en position haute, la pince 42 de préhension de poignée se situe au-dessus de la paire supérieure d'oreilles de verrouillage 68, ce qui permet le dégagement du bras de transfert 24 lorsque l'unité porte-moule est fermée.

La machine selon l'invention comporte un système de transfert de préformes et de poignées qui est simple et compact. De plus, ce système permet de garantir un bon positionnement de la poignée, sans qu'il n'y ait de risque de voir la poignée se déplacer par rapport au moule lors de la fermeture de l'unité de moulage. Le fonctionnement de la machine s'en trouve fiabilisé. Enfin, le verrouillage de l'unité porte-moule ne se trouve pas affecté par la présence du système de transfert, contrairement au cas de la plupart des machines connues jusqu'à présent.

## Revendications

1. Machine de soufflage de récipients à partir d'une préforme préalablement réalisée par injection, du type dans lequel une unité de moulage (14) comporte un moule (16) en deux parties qui sont portées chacune par une partie d'un porte-moule (18) et qui délimitent une cavité dans laquelle, lorsque l'unité de moulage est ouverte, la préforme (21) est amenée par au moins un bras de transfert (24), du type dans lequel le récipient comporte une poignée rapportée (50) dont au moins une zone d'accrochage (51) est engagée à l'intérieur de la cavité (17) pour être surmoulée lors du soufflage par le matériau de la préforme (21), et du type comportant au moins un dispositif de préhension (42) apte à saisir une poignée (50) par une zone de préhension (58) pour l'amener depuis une unité d'alimentation (66) jusqu'au moule (16), lequel dispositif de préhension (42) de poignées étant porté par le bras de transfert (24) de préformes, entre le moule (16) et le porte-moule (18) étant prévu un évidement (60) qui est apte à recevoir le dispositif de préhension (42) lors de la fermeture de l'unité de moulage (14) et qui permet de dégager le dispositif de préhension (42) de l'unité de moulage (14) après la fermeture de celle-ci, la cavité (17) délimitée dans le moule (16) étant ouverte axialement de telle sorte qu'une extrémité ouverte de la préforme (21) dépasse axialement au-delà d'une face transversale du moule (18), **caractérisée en ce que** l'évidement (60) est ouvert axialement en direction de la dite face transversale du moule (16) pour permettre le dégagement selon cette direction du dispositif de préhension (42) de poignées.

2. Machine de soufflage selon la revendication 1, **caractérisée en ce que** le dispositif de préhension (42) de poignées est monté mobile axialement sur le bras (24).

3. Machine de soufflage selon la revendication 2, **caractérisée en ce que** le dispositif de préhension (42) de poignées est monté sur un coulisseau (52) qui assure son montage mobile axial sur le bras (24).

4. Machine de soufflage selon la revendication 3, **caractérisée en ce que** le coulisseau (52) est réalisé sous la forme de deux tiges verticales parallèles (44) qui coulissent verticalement au travers d'une tête (26) du bras (24) et qui sont réunies à leurs extrémités par deux traverses horizontales inférieure (46) et supérieure (48).

5. Machine de soufflage selon la revendication 4, **caractérisée en ce que** ladite tête (26) du bras (24) est une tête orientable.

6. Machine de soufflage selon la revendication 5, **caractérisée en ce que** la tête orientable (26) porte un organe (40) de saisie de préformes (21).

7. Machine de soufflage selon l'une quelconque des revendications précédentes, **caractérisée en ce que**, lorsque le moule (16) est fermé, la zone de préhension (58) de la poignée (50) est agencée à l'extérieur du moule de telle sorte que le dispositif de préhension (42) peut relâcher la poignée (50) après la fermeture du moule (16).

8. Machine de soufflage selon l'une quelconque des revendications précédentes, **caractérisée en ce que** l'unité de moulage (14) est montée sur un carrousel (12) qui est entraîné en rotation autour de son axe (A0), et **en ce que** le bras de transfert (24) est monté sur une roue de transfert (23) qui est entraînée en rotation autour de son axe (A2), l'axe de la roue de transfert (23) étant parallèle à celui (A0) du carrousel (12).

9. Machine de soufflage selon la revendication 8, **caractérisée en ce que** la roue de transfert (23) comporte plusieurs bras de transfert (24) dont chacun est muni d'un dispositif (42) de préhension de poignées.

10. Machine de soufflage selon l'une des revendications 8 ou 9, **caractérisée en ce que** l'unité de moulage (14) est de type portefeuille, les deux parties du porte-moule (18) étant articulées entre elles et sur le carrousel autour d'un axe (A1) parallèle à celui (A0) du carrousel (12) de telle sorte que le plan de joint du moule (16) soit sensiblement contenu dans un plan radial du carrousel (12).

11. Machine de soufflage selon l'une quelconque des revendications 8 à 10 prise en combinaison avec la revendication 5, **caractérisée en ce que** la tête orientable (26) du bras (24) est montée à rotation sur le bras (24) autour d'un axe (A4) parallèle à l'axe de rotation (A2) de la roue de transfert (23).

12. Machine de soufflage selon la revendication 11, **caractérisée en ce que** le bras (24) et la tête orientable (26) sont commandés de manière à ce que, au cours de la fermeture du moule, la poignée (50) conserve un positionnement sensiblement constant par rapport au plan de joint du moule (16).

## Patentansprüche

1. Maschine zum Blasformen von Behältern aus einer zuvor durch Spritzformen hergestellten Vorform von der Art, bei der eine Formeinheit (14) eine Form (16) aus zwei Teilen umfasst, die jeweils von einem Teil eines Formträgers (18) getragen werden und die einen Hohlraum begrenzen, in dem, wenn die Formeinheit offen ist, die Vorform (21) durch zumindest einen Transferarm (24) von der Art verbracht wird, bei der der Behälter einen angefügten Griff (50) umfasst, von dem zumindest ein Befestigungsbereich (51) ins Innere des Hohlraums (17) eingreift, um beim Blasformen durch das Material der Vorform (21) überformt zu werden, und der Art, die zumindest eine Greifvorrichtung (42) umfasst, die in der Lage ist, einen Griff (50) durch einen Greifbereich (58) zu ergreifen, um ihn von einer Versorgungseinheit (66) bis zur Form (16) zu verbringen, wobei die Greifvorrichtung (42) für Griffe durch den Vorformtransferarm (24) getragen wird, wobei zwischen der Form (16) und dem Formträger (18) eine Ausnehmung (60) vorgesehen ist, die in der Lage ist, die Greifvorrichtung (42) beim Schließen der Formeinheit (14) aufzunehmen und die es gestattet, die Greifvorrichtung (42) von der Formeinheit (14) nach deren Verschluss zu lösen, wobei der in der Form (16) begrenzte Hohlraum (17) in axialer Richtung offen ist, so dass ein offenes Ende der Vorform (21) in axialer Richtung über eine querliegende Fläche der Form (18) hinausragt, **dadurch gekennzeichnet, dass** die Ausnehmung (60) axial in Richtung der querliegenden Fläche der Form (16) offen ist, um die Lösung der Greifvorrichtung (42) für Griffe entlang dieser Richtung zu gestatten.

2. Blasformmaschine nach Anspruch 1, **dadurch gekennzeichnet, dass** die Greifvorrichtung (42) für Griffe auf dem Arm (24) axial beweglich montiert ist.

3. Blasformmaschine nach Anspruch 2, **dadurch gekennzeichnet, dass** die Greifvorrichtung (42) für Griffe auf einem Gleitlager (52) montiert ist, dass für seine axial beweglich Montage auf dem Arm (24) sorgt.

4. Blasformmaschine nach Anspruch 3, **dadurch gekennzeichnet, dass** das Gleitlager (52) in Form von zwei vertikalen, parallelen Schäften (44) realisiert ist, die vertikal durch einen Kopf (26) des Arms (24) gleiten und die an ihren durch zwei horizontale untere (46) und obere (48) Streben vereinigt sind.

5. Blasformmaschine nach Anspruch 4, **dadurch gekennzeichnet, dass** der Kopf (26) des Arms (24) ein orientierbarer Kopf ist.

6. Blasformmaschine nach Anspruch 5, **dadurch gekennzeichnet, dass** der orientierbare Kopf (26) ein Organ (40) zum Ergreifen von Vorformen (21) trägt.

7. Blasformmaschine nach einem der vorhergehenden Ansprüche, **dadurch gekennzeichnet, dass**, wenn die Form (16) geschlossen ist, der Greifbereich (58) des Griffs (50) außerhalb der Form so angeordnet ist, dass die Greifvorrichtung (42) den Griff (50) nach dem Schließen der Form (16) loslassen kann.

8. Blasformmaschine nach einem der vorhergehenden Ansprüche, **dadurch gekennzeichnet, dass** die Formeinheit (14) auf einem Karussell (12) montiert ist, das um seine Achse (A0) drehend angetrieben wird, und dass der Transferarm (24) auf einem Transferrad (23) montiert ist, das um seine Achse (A2) drehend angetrieben wird, wobei die Achse des Transferrads (23) parallel zu derjenigen (A0) des Karussells (12) ist.

9. Blasformmaschine nach Anspruch 8, **dadurch gekennzeichnet, dass** das Transferrad (23) mehrere Transferarme (24) umfasst, von denen jeder mit einer Greifvorrichtung (42) für Griffe versehen ist.

10. Blasformmaschine nach einem der Ansprüche 8 oder 9, **dadurch gekennzeichnet, dass** die Formeinheit (14) vom Portfeuille-Typ ist, wobei die zwei Teile des Formträgers (18) untereinander und an dem Karussell um eine Achse (A1) parallel zu derjenigen (A0) des Karussells (12) gelenkig gelagert sind, so dass die Stoßebene der Form (16) im Wesentlichen in einer radialen Ebene des Karussells (12) liegt.

11. Blasformmaschine nach einem der Ansprüche 8 bis 10 in Kombination mit Anspruch 5, **dadurch gekennzeichnet, dass** der orientierbare Kopf (26) des Arms (24) auf dem Arm (24) um eine zu der Drehachse (A4) des Transferrades (23) parallelen Achse (A2) drehbar montiert ist.

12. Blasformmaschine nach Anspruch 11, **dadurch gekennzeichnet, dass** der Arm (24) und der orientierbare Kopf (26) so betätigt werden, dass der Griff (50) während des Schließens der Form eine im Wesentlichen konstante Positionierung relativ zu der Stoßebene der Form (16) beibehält.

## Claims

1. Machine for blow moulding containers from a previously injection-moulded preform, of the type in which a moulding unit (14) comprises a mould (16) in two parts which are each carried by one part of a mould carrier (18) and which define a cavity into which, when the moulding unit is open, the preform (21) is inserted by at least one transfer arm (24), of the type in which the container comprises an add-on handle (50) with at least one attachment portion (51) which is engaged inside the cavity (17) in order to be overmoulded when the material of the preform (21) is blown, and of the type that comprises at least one grab (42) able to grasp a handle (50) by a grab portion (58) and take it from a feeder unit (66) to the mould (16), which handle grab (42) is carried by the preform transfer arm (24), a recess (60) being provided between the mould (16) and the mould carrier (18), which recess is able to accommodate the grab (42) when the moulding unit (14) is closed and allows the grab (42) to be withdrawn from the moulding unit (14) after the latter closes, and the cavity (17) defined inside the mould (16) being axially open so that an open end of the preform (21) extends axially beyond a transverse face of the mould (18), which machine is **characterized in that** the recess (60) is axially open in the direction of the said transverse face of the mould (16) to allow the handle grab (42) to be withdrawn in this direction.

2. Blow-moulding machine according to Claim 1, **characterized in that** the handle grab (42) is mounted with axial mobility on the arm (24).

3. Blow-moulding machine according to Claim 2, **characterized in that** the handle grab (42) is mounted on a slider (52) by which it is mounted with axial mobility on the arm (24).

4. Blow-moulding machine according to Claim 3, **characterized in that** the slider (52) is in the form of two parallel vertical rods (44) that slide vertically through a head (26) belonging to the arm (24) and that are connected at their ends by a lower horizontal crosspiece (46) and an upper horizontal crosspiece (48).

5. Blow-moulding machine according to Claim 4, **characterized in that** the said head (26) of the arm (24) is an orientable head.

6. Blow-moulding machine according to Claim 5, **characterized in that** the orientable head (26) carries a preform (21) grasping member (40).

7. Blow-moulding machine according to any one of the previous claims, **characterized in that**, when the mould (16) is closed, the grab portion (58) of the handle (50) is outside of the mould, so that the grab (42) can release the handle (50) once the mould (16) is closed.

8. Blow-moulding machine according to any one of the previous claims, **characterized in that** the moulding unit (14) is mounted on a carousel (12) that is rotated about its axis (A0), and **in that** the transfer arm (24) is mounted on a transfer wheel (23) rotated about its axis (A2), the axis of the transfer wheel (23) being parallel to the axis (A0) of the carousel (12).

9. Blow-moulding machine according to Claim 8, **characterized in that** the transfer wheel (23) comprises several transfer arms (24), each of which is provided with a handle grab (42).

10. Blow-moulding machine according to either of Claims 8 and 9, **characterized in that** the moulding unit (14) is of the jackknife type, the two parts of the mould carrier (18) being hinged to each other and to the carousel about an axis (A1) parallel to the axis (A0) of the carousel (12) in such a way that the joint face of the mould (16) is roughly contained in a radial plane of the carousel (12).

11. Blow-moulding machine according to any one of Claims 8 to 10 taken in combination with Claim 5, **characterized in that** the orientable head (26) of the arm (24) is mounted rotatably on the arm (24) about an axis (A4) parallel to the axis of rotation (A2) of the transfer wheel (23).

12. Blow-moulding machine according to Claim 11, **characterized in that** the arm (24) and the orientable head (26) are controlled in such a way that, as the mould closes, the handle (50) maintains an approximately constant position with respect to the joint face of the mould (16).
